Europäisches Patentamt

European Patent Office

Office européen des brevets

(11) Veröffentlichungsnummer: **0 284 158 B1**

## (12) EUROPÄISCHE PATENTSCHRIFT

(45) Veröffentlichungstag der Patentschrift: **11.11.92**

(51) Int. Cl.⁵: **G06F  15/62**

(21) Anmeldenummer: **88200535.8**

(22) Anmeldetag: **23.03.88**

(54) **Verfahren, bei dem ein Untersuchungsbereich aus mehreren Strahlenquellenpositionen durchstrahlt wird.**

(30) Priorität: **26.03.87 DE 3710011**

(43) Veröffentlichungstag der Anmeldung:
**28.09.88 Patentblatt  88/39**

(45) Bekanntmachung des Hinweises auf die
Patenterteilung:
**11.11.92 Patentblatt  92/46**

(84) Benannte Vertragsstaaten:
**DE FR GB**

(56) Entgegenhaltungen:
**EP-A- 0 182 429**
**DE-A- 3 237 572**

**MEDICAL PHYSICS, Band 12, Nr. 4,
Juli/August 1985, Seiten 431-436, Am. Assoc.
Phys. Med., New York, US; P. HAAKER et al.:
"A new digital tomosynthesis method with
less artifacts for angiography"**

(73) Patentinhaber: **Philips Patentverwaltung
GmbH
Wendenstrasse 35 Postfach 10 51 49
W-2000 Hamburg 1(DE)**
(84) Benannte Vertragsstaaten:
**DE**

(73) Patentinhaber: **N.V. Philips' Gloeilampenfabrieken
Groenewoudseweg 1
NL-5621 BA Eindhoven(NL)**
(84) Benannte Vertragsstaaten:
**FR GB**

(72) Erfinder: **Haaker,Paul
Burgwedeltwiete 11
W-2000 Hamburg 61(DE)**
Erfinder: **Klotz, Erhard
Seekamp 110
W-2083 Halstenbek(DE)**
Erfinder: **Koppe, Reiner, Dr.
Rugenbergener Weg 3
W-2000 Hammburg 61(DE)**
Erfinder: **Linde, Rolf
Kamperrege 21
W-2081 Haseldorf(DE)**

(74) Vertreter: **Hartmann, Heinrich, Dipl.-Ing. et al
Philips Patentverwaltung GmbH Wendenstrasse 35 Postfach 10 51 49
W-2000 Hamburg 1(DE)**

# Beschreibung

Die Erfindung betrifft ein Verfahren, bei dem ein Untersuchungsbereich aus mehreren Strahlenquellenpositionen zur Erzeugung getrennter Einzelbilder durchstrahlt wird, wobei für jedes Einzelbild von der Absorption in seinen Bildpunkten abhängige digitale Meßwerte gespeichert werden und für einen Schichtbildpunkt einer Schicht im Untersuchungsbereich jeweils ein der Absorption in diesem Punkt entsprechender Bildwert aus den gespeicherten Meßwerten der dem Schichtbildpunkt geometrisch zugeordneten Bildpunkte abgeleitet wird, und eine Anordnung zur Durchführung dieses Verfahrens.

Ein Verfahren der eingangs genannten Art ist aus der deutschen Patentanmeldung P 32 37 572 sowie aus der Zeitschrift "Medical Physics", Vol. 12, Nr. 4, Juli/August 1985, Seiten 431 bis 436 bekannt. Dieses Verfahren eignet sich zur Erzeugung von Röntgen-Schichtbildern von sogenannten "dilute objects", d.h. von Objekten, die in den meisten Volumenelementen eine vergleichsweise kleine Absorption für Röntgenstrahlung und nur in wenigen Volumenelementen eine starke Absorption aufweisen. Ein bevorzugtes Anwendungsgebiet ist die Darstellung von mit einem Kontrastmittel gefüllten Herzkranzgefäßen. Bei derartigen Objekten beispielsweise den mit Kontrastmittel gefüllten Herzkranzgefäßen eines Patienten ergeben sich mit dem bekannten Verfahren weitgehend artefaktfreie Schichtbilder aus nur wenigen Einzelbildern, d.h. es sind nur wenige Strahlenquellen (z.B. vier) erforderlich.

Bei derartigen Untersuchungen ist es oft erwünscht, einen räumlichen Eindruck des Untersuchungsbereichs zu erhalten. Ein solcher räumlicher Eindruck kann beispielsweise dadurch erzeugt werden, daß zwei aus räumlich benachbarten Positionen (Stereobasis) aufgenommene Röntgenbilder gleichzeitig so wiedergegeben werden, daß jeweils ein Bild von einem Auge wahrgenommen wird, oder dadurch, daß aus benachbarten Positionen aufgenommene Bilder zeitlich nacheinander wiedergegeben werden, so daß für den Beobachter das Objekt "gedreht" wird. Es ist auch eine Kombination beider Verfahren möglich.

Diese Art der räumlichen Wiedergabe erfordert aber das Vorhandensein von Röntgenbildern, die aus räumlich benachbarten Positionen aufgenommen wurden. Diese Bedingung ist bei dem oben genannten Verfahren nicht erfüllt, weil dabei nur wenige Aufnahmen aus stark voneinander abweichenden Perspektiven aufgenommen werden, so daß ein Beobachter nicht in der Lage ist, zwei Einzelbilder zu einem einzigen Stereobild zu integrieren.

Aufgabe der vorliegenden Erfindung ist es, ein Verfahren der eingangs genannten Art so auszugestalten, daß damit eine räumliche Wiedergabe möglich wird, und eine dafür geeignete Anordnung anzugeben.

Diese Aufgabe wird dadurch gelöst, daß für wenigstens eine einer der Strahlenquellenpositionen benachbarte Position ein synthetisches Bild des Untersuchungsbereichs oder eines Teiles davon berechnet wird, indem aus den Bildwerten derjenigen Schichtbildpunkte, die auf einer Geraden zwischen der Position und einem Bildpunkt des synthetischen Einzelbildes liegen, jeweils ein Bildwert für den betreffenden Bildpunkt abgeleitet wird, und daß das so erzeugte synthetische Bild zur räumlichen Wiedergabe des Untersuchungsbereiches herangezogen wird.

Die Erfindung nutzt die Tatsache aus, daß bei einem Verfahren der eingangs genannten Art Daten über die Absorptionsverteilung in dem dreidimensionalen Untersuchungsbereich an sich vorliegen, weil sich aus den Einzelbildern Bilder der Absorptionsverteilung in verschiedenen Schichten des Objektes (sogenannte Schichtbilder) berechnen lassen. Es ist daher grundsätzlich möglich, aus einer bei der Aufnahme der Einzelbilder nicht vorgesehenen Perspektive ein synthetisches Bild des Untersuchungsbereichs zu erzeugen, dessen Perspektive der Perspektive eines der Einzelbilder benachbart ist. Das synthetische Bild und das aus benachbarter Perspektive aufgenommene Einzelbild können dann als Stereo-Bildpaar betrachtet werden. Die aus benachbarten Perspektiven aufgenommenen (Einzel- und synthetischen) Bilder können dann dem zuvor erwähnten Wiedergabeverfahren unterworfen werden, das dem Benutzer einen räumlichen Eindruck des Untersuchungsbereichs vermittelt.

Es ist nicht erforderlich, daß das synthetische Bild den gesamten Untersuchungsbereich wiedergibt; es genügt vielmehr ein - eine Anzahl von Schichten des Untersuchungsbereiches umfassender - Teil. Nur dieser Teil kann dann stereoskopisch betrachtet werden.

Die synthetischen Bilder können dadurch erzeugt werden, daß zunächst Bilder sämtlicher Schichten des Untersuchungsbereiches rekonstruiert werden und daß daraus synthetische Bilder erstellt werden, wobei der Bildwert für einen Bildpunkt in den synthetischen Bildern aus den Bildwerten aller Schichtbildpunkte abgeleitet wird, die von der zugehörigen Position aus auf den Bildpunkt projiziert werden. Ein solches Verfahren würde eine hohe Speicherkapazität erfordern, weil neben den Speichern für die Einzelbilder und für wenigstens ein synthetisches Bild noch Speicher für sämtliche Schichten erforderlich wären.

Dieser Speicheraufwand kann nach einer Weiterbildung der Erfindung dadurch entfallen, daß nach jeder Bestimmung des Bildwertes eines Schichtbildpunktes dieser Bildwert zur Berechnung des Bildwertes desjenigen Bildpunktes im synthetischen Bild herangezogen wird, der dem Schichtbildpunkt geometrisch zugeordnet ist, und daß erst danach der Bildwert für einen weiteren Schichtbildpunkt bestimmt wird. Da der Bildwert eines Schichtbildpunktes, sobald er (aus Meßwerten der Einzelbilder) rekonstruiert worden ist, zur Ableitung des Bildwertes eines Bildpunktes in dem synthetischen Bild herangezogen wird, muß er nicht gespeichert werden; bei dieser Ausgestaltung des Verfahrens sind also nur noch Speicher für die Einzelbilder und für die synthetischen Bilder erforderlich.

Zur genauen Bestimmung des Bildwertes eines Bildpunktes ist es in der Regel erforderlich, zwischen den Bildwerten benachbarter Bildpunkte innerhalb einer Schicht zu interpolieren. Dieser Rechenaufwand läßt sich nach einer weiteren Ausgestaltung der Erfindung dadurch vermeiden, daß jede Position für die Berechnung eines synthetischen Bildes auf der Verbindungsgeraden zwischen zwei Strahlenquellenpositionen im Abstand $D/m$ von einer dieser Strahlenquellenpositionen liegt, wobei $m$ eine ganze Zahl größer als 1 ist, und $D$ der Abstand zweier Strahlenquellenpositionen, und daß zur Ableitung von Bildwerten für das synthetische Bild Bildwerte von Schichtbildpunkten herangezogen werden, die in Schichtebenen liegen, in denen sich die Verbindungsgeraden zwischen den Strahlenquellenpositionen und den Bildpunkten der zugehörigen Einzelbilder und die Verbindungsgeraden der Bildpunkte des synthetischen Bildes mit der diesem Bild zugeordneten Bestrahlungsposition schneiden.

Diese Ausgestaltung basiert auf der Erkenntnis, daß - bei geeigneter Lage der Bildpunkte im synthetischen Bild die Schichtbildpunkte aus den (Strahlenquellen-) Positionen auf die Bildpunkte der Einzelbilder bzw. der synthetischen Bilder projiziert werden. Ohne Interpolation ist es daher möglich, aus den Meßwerten der Bildpunkte in den Einzelbildern die Bildwerte für die Schichtbildpunkte abzuleiten und aus diesen wiederum die Bildwerte für die Bildpunkte des synthetischen Bildes. Dieser wesentlichen Verringerung an Rechenaufwand steht eine gewisse Verringerung an Information gegenüber, weil nur aus jeder m-ten Schicht Information zur Rekonstruktion des synthetischen Bildes herangezogen wird. In der Praxis hat es sich jedoch herausgestellt, daß auch für $m = 10$, wobei also nur jede zehnte Schicht zur Rekonstruktion des synthetischen Bildes dient, das synthetische Bild noch genügend Information enthält, um in Verbindung mit dem aus einer benachbarten Strahlenquellenpositon aufgenommenen Einzelbild einen räumlichen Eindruck zu vermitteln. Der Faktor $m$

bestimmt den Abstand zwischen der Position für ein synthetisches Bild und ein benachbartes Einzelbild und damit die Stereo-Basis. Durch Veränderung von $m$ kann diese daher individuellen Bedürfnissen angepaßt werden.

In Weiterbildung der Erfindung ist vorgesehen, daß die Lage von durch den Benutzer vorgebbaren Schichtbildpunkten in den Einzelbildern und in dem bzw. den synthetischen Bild(ern) berechnet und in diesen Bildern bei der Wiedergabe markiert wird. Dadurch ist es möglich, die Lage eines für die Diagnose wichtigen Gebietes im Untersuchungsbereich z.B. durch einen Cursor zu markieren und die Koordinaten des markierten Schichtbildpunktes in einem karthesischen Koordinatensystem anzuzeigen. Von besonderem Vorteil ist es dabei, wenn mehrere Stereo-Bildpaare jeweils mit den markierten Punkten gleichzeitig auf einer Wiedergabeeinrichtung wiedergegeben, so daß die Positionierung des Cursors aus verschiedenen Perspektiven genau kontrolliert werden kann.

In Weiterbildung dieser Ausgestaltung ist vorgesehen, daß der Abstand von zwei durch den Benutzer vorgegebenen Schichtbildpunkten berechnet und angezeigt wird. Dies erlaubt es, anhand der Stereobilder genaue Vermessungen innerhalb des Untersuchungsbereiches vorzunehmen.

Eine Anordnung zur Durchführung des erfindungsgemäßen Verfahrens hat mehrere in einer Ebene angeordnete Röntgenstrahlenquellen zur Durchstrahlung eines Untersuchungsbereiches, eine Bildaufnehmeranordnung zur Aufnahme der von den Strahlenquellen erzeugten, räumlich getrennten Einzelbilder des Untersuchungsbereiches, Mittel zum Digitalisieren der der Absorption in den Bildpunkten des Einzelbildes entsprechenden Meßwerte, eine erste Speicheranordnung zum Speichern der Meßwerte, Mittel zum Bestimmen der Bildwerte von Schichtbildpunkten, eine zweite Speicheranordnung zur Aufnahme der Bildwerte wenigstens eines synthetischen Bildes, Mittel zum Ableiten jeweils eines Bildwertes für einen Bildpunkt des synthetischen Bildes aus dem Bildwert eines Schichtbildpunktes, und eine Wiedergabeeinheit, die mit den Speicheranordnung en koppelbar ist.

Die Erfindung wird nachstehend anhand der Zeichnungen näher erläutert. Es zeigen:

Fig. 1     eine Anordnung zur Durchführung des Verfahrens in schematischer Darstellung,

Fig. 2     die geometrischen Verhältnisse bei einer derartigen Anordnung,

Fig. 3     eine für die Anordnung nach Fig. 1 geeignete Bildverarbeitungseinheit,

Fig. 4     ein Betrachtungsgerät zum Betrachten von Stereobildern, und

Fig. 5     die räumliche Lage der Strahlenquellen und der Positionen, für die die synthetischen Bilder berechnet werden.

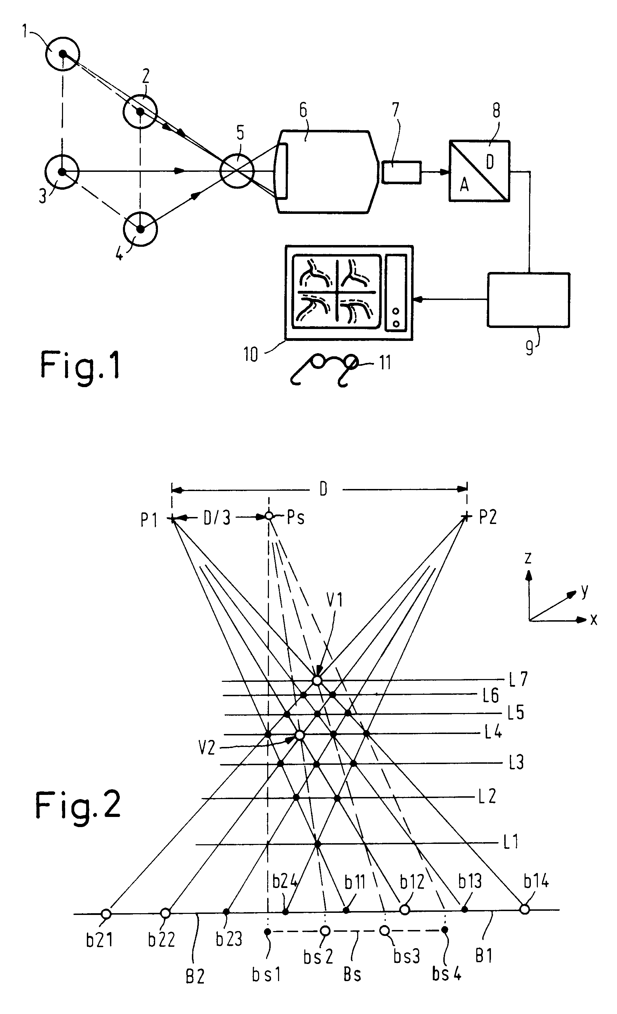

In Fig. 1 sind vier Röntgenstrahlenquellen 1, 2, 3 und 4 auf den Eckpunkten eines Quadrates angeordnet und durchstrahlen ein Untersuchungsobjekt 5. Dadurch werden auf dem Eingangsschirm eines Bildverstärkers 6 vier räumlich voneinander getrennte Einzelbilder erzeugt. Das Bild am Ausgangsschirm des Bildverstärkers 6 wird von einer Videokamera 7 in ein elektrisches Signal und von einem Analog-Digital-Wandler 8 in eine Folge von digitalen Datenworten umgesetzt. Daraus werden in einer Bildverarbeitungseinheit 9 vier Stereobildpaare erzeugt, die auf einem Monitor 10 wiedergegeben werden, so daß sich bei Betrachtung dieser Bildpaare mit einer Stereobrille 11 ein räumlicher Eindruck des Objektes 5 ergibt.

Die geometrischen Verhältnisse bei der Anordnung nach Fig. 1 ergeben sich aus Fig. 2, wobei der Einfachheit halber nur der zweidimensionale Fall betrachtet wird, bei dem Ebenen Geraden entsprechen. Der Röntgenstrahler 1, der sich in der Position P1 befindet, erzeugt in der Ebene des Eingangsschirms des Bildwandlersystems ein Bild B1 des Untersuchungsobjektes. Dieses Bild besteht aus einer Zeile von vier Bildpunkten b11, b12, b13, b14 (von links nach rechts). In Wirklichkeit besitzt eine Zeile wesentlich mehr Bildpunkte, z.B. 256, und ein Bild enthält mehr als eine Zeile, z.B. ebenfalls 256. Lage und Größe der Bildpunkte wird durch Phase und Frequenz des Taktsignals für den Analog-Digital-Wandler 8 in bezug auf das Signal der Videokamera 7 mitbestimmt.

In analoger Weise erzeugt die an der Positon P2 befindliche Strahlenquelle 2 ein Bild B2, das (ebenfalls von links nach rechts) aus den Punkten b21, b22, b23 und b24 besteht.

Verbindet man die Bildpunkte (z.B. b1...b14) mit der Position der zugehörigen Strahlenquelle (P1), dann entstehen zwei Strahlenbündel, deren Strahlen sich in Schichten L1...L7 schneiden, die parallel zur Ebene der Strahlenquellen verlaufen. Jeder Schnittpunkt eines Strahls des einen Strahlenbündels mit einem Strahl eines anderen Strahlenbündels entspricht einem Schichtbildpunkt. Der Untersuchungsbereich, innerhalb dessen einen Objekt abgebildet werden kann, wird im wesentlichen durch die äußeren Strahlen der beiden Strahlenbündel begrenzt.

Es sei an dieser Stelle darauf hingewiesen, daß die vorstehend gebrauchten geometrischen Begriffe, wie Punkte, Strahlen, Geraden und Schichten, nicht im mathematischen Sinne zu verstehen sind, sondern von Null verschiedene endliche Ausdehnungen haben; die in Fig. 2 gezeichneten Punkte und Geraden stellen lediglich die Mittelpunkte bzw. Mittellinien dieser Gebilde dar.

Die Zeichnung zeigt, daß sich die beiden Randstrahlen der von den Positionen P1 und P2 ausgehenden Strahlenbündel in der Schicht L4 schneiden. Diese Schicht hat ebenso viele Bildpunkte wie die Einzelbilder. Daneben gibt es noch weitere Schichten (L1...L3 und L5...L7), in denen sich die Strahlen ebenfalls schneiden, die aber weniger Schichtbildpunkte haben als die Schicht L4. Die Zahl der Schichten hängt von der Zahl der Bildpunkte in einer Zeile eines Einzelbildes ab; bei n Bildpunkten gibt es 2n-1 verschiedene Schichten.

In der Zeichnung ist angenommen, daß im Untersuchungsbereich nur die Volumenelemente V1 und V2 eine von Null verschiedene Absorption haben. Diese Volumenelemente werden in dem Einzelbild B1 in den Punkten b14 und b12 abgebildet und in dem Einzelbild B2 auf die Punkte b21 und b22 projiziert. In der schon erwähnten Schichtebene L4 befindliche Schichtbildpunkte werden also in den Einzelbildern auf Bildpunkte projiziert, deren Lage innerhalb der Einzelbilder die gleiche ist; beispielsweise wird das Volumenelement V2 in der Schicht L4 auf die Bildpunkte b12 bzw. b22 in den Einzelbildern B1 bzw. B2 projiziert. Demgegenüber werden Volumenelemente, die sich außerhalb der Schicht L4 befinden, auf Bildpunkte (b14 bzw. b21) projiziert, die innerhalb der Einzelbilder unterschiedliche Positionen einnehmen. Dabei gilt für dichter bei den Strahlenquellenpositionen liegende Schichten (wie die Schichten L5...L7), daß die Projektion eines Schichtbildpunktes in dem von der rechten Strahlenquelle P2 erzeugten Schichtbild B2 um einen oder mehrere Bildpunkte weiter links liegt als in dem Einzelbild B1, das von der linken Strahlenquelle P1 erzeugt wird. Für die unter der Schicht L4 liegenden Schichten L1...L3 sind die Verhältnisse analog, jedoch erfolgt in diesen Fällen die Verschiebung der Abbildung nach rechts anstatt nach links.

Dieser Sachverhalt vereinfacht die Rekonstruktion der Absorptionsverteilung in den Schichten L1...L7 aus den Einzelbildern B1...B2, weil dazu lediglich Adreßoperationen, aber keine Interpolationen zwischen den Bildwerten mehrerer Bildpunkte eines Einzelbildes nötig sind.

Es sei angenommen, daß der Abstand zwischen den Strahlenquellenpositionen P1 und P2 D sei. Dann läßt sich zeigen, daß für eine Strahlenquellenposition Ps, die auf der Verbindungsgerade zwischen P1 und P2 im Abstand D/m von einer der Strahlenquellen angeordnet ist (wobei m eine ganze positive Zahl ist), ein synthetisches Bild Bs errechnet werden kann, auf dessen Bildpunkte bs1, bs2, bs3 und bs4 die Schichtbildpunkte jeder m-ten Schicht projiziert werden. Das synthetische Bild kann also aus den Bildwerten dieser Schichtbildpunkte ohne Interpolation abgeleitet werden.

In der Zeichnung befindet sich die Position Ps zwischen den Strahlenquellenpositionen P1 und P2 im Abstand D/3 von der Strahlenquellenposition P1 und das Bild Bs ist so angeordnet, daß sich die Verbindungslinien der Bildpunkte bs1...bs4 mit der Position Ps in einer Ebene - der Ebene L4 - mit den von den Strahlenquellen P1, P2 zu den Bildpunkten der Bilder B1, B2 verlaufenden Strahlen in den gleichen Punkten schneiden. Das gleiche passiert dann in jeder dritten Schicht, wobei von der Schicht L4 ausgegangen wird - im vorliegenden Beispiel also auch noch in den Schichten L1 und L7.

Ein Schichtbildpunkt in der Schicht L4 wird in dem synthetischen Bild Bs an der gleichen Stelle abgebildet wie in den Einzelbildern; beispielsweise wird der Schichtbildpunkt V2 in dem synthetischen Bild auf den Bildpunkt bs2 und in den Einzelbildern auf die Bildpunkte b12 und b22 projiziert - d.h. jeweils auf den zweiten Bildpunkt von links. - Die Projektion eines Bildpunktes in der dritten auf die Schicht L4 folgenden Schicht (L7) wird im synthetischen Bild auf einen Bildpunkt projiziert, der gegenüber dem aus der benachbarten Strahlenquellenposition P1 aufgenommenen Bild B1 um eine Stelle nach rechts versetzt ist; beispielsweise wird der Schichtbildpunkt V1 in der Schicht L7 auf den Bildpunkt bs3 im Bild Bs projiziert, dessen Lage (dritter von links) in dem synthetischen Bild Bs gegenüber der Lage des Bildpunktes b14, auf den im Einzelbild B1 der Schichtbildpunkt V1 projiziert wird, um einen Bildpunkt versetzt ist.

Von diesen geometrischen Zusammenhängen ausgehend ergeben sich folgende Verfahrensschritte zur Rekonstruktion eines synthetischen Bildes aus den Einzelbildern:

a) Es wird zunächst für eine Schicht - z.B. L4 - der Bildwert eines Schichtbildpunktes aus den Einzelbildern bestimmt. Zu diesem Zweck werden aus allen Einzelbildern die Bildwerte derjenigen Bildpunkte herangezogen, auf die der betreffende Schichtbildpunkt projiziert wird - also die Bildwerte für die Bildpunkte b12, b22 und die geometrisch zugeordneten Bildpunkte in den Einzelbildern der anderen Strahlenquellen. Aus diesen Bildwerten wird derjenige, der der kleinsten Absorption (vgl. DE-OS 32 37 572) oder der zweitkleinsten Absorption (vgl. deutsche Patentanmeldung P 36 32 833.2) entspricht, als Bildwert dem Schichtbildpunkt (V2) zugeordnet.

b) Aus dem gemäß a) berechneten Bildwert wird der Bildwert des Bildpunktes (bs2) in dem synthetischen Bild Bs ermittelt, auf den der Schichtbildpunkt (V2) aus der Position Ps projiziert wird. Zu diesem Zweck kann der Bildwert des Schichtbildpunktes - gegebenenfalls normiert - zu dem für diesen Bildpunkt gegebenenfalls schon gespeicherten Bildwert addiert werden. Vorzugsweise wird er aber mit dem schon gespeicherten Bildwert verglichen, und es wird für diesen Bildpunkt derjenige der beiden Bildwerte gespeichert, der der größeren Absorption entspricht. Dadurch werden die Schichtbildpunkte mit kleiner Absorption, d.h. der unerwünschte Bildhintergrund, unterdrückt.

c) Wiederholung der Schritte a) und b) für alle Schichtbildpunkte der gleichen Schicht (L4).

d) Wiederholung der Schritte a) bis c) für die m-te auf die erste Schicht (L4) folgende Schicht usw., bis alle Schichtbildpunkte, die innerhalb des durch die äußeren Randstrahlen definierten Volumens liegen, berechnet und verarbeitet sind. Gegebenenfalls kann diese Verarbeitung aber auch auf einige Schichten beschränkt bleiben, so daß nur eine relativ dicke Schicht des Untersuchungsbereiches stereoskopisch betrachtet werden kann.

Grundsätzlich wäre es auch möglich, zunächst die Bildwerte für die Schichtpunkte aller Schichten (oder nur jeder m-ten Schicht) zu berechnen und erst danach für jeden Bildpunkt des synthetischen Bildes den Schritt b auszuführen. Dies würde allerdings voraussetzen, daß diese Schichtbilder gespeichert werden. Das Speichern der Schichtbilder entfällt bei der oben angegebenen Reihenfolge der Verfahrensschritte.

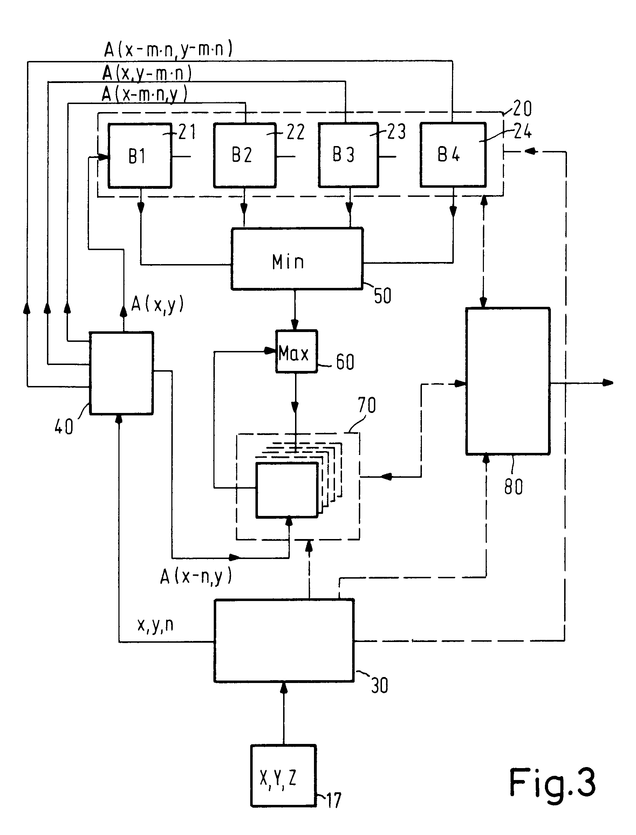

Die erläuterten Verfahrensschritte werden von der Bildverarbeitungseinheit 9 durchgeführt, deren Blockschaltbild in Fig. 3 dargestellt ist. Die Einheit weist einen Bildspeicher 20 auf, der für jedes der von den Strahlenquellen 1 bis 4 erzeugten Einzelbilder B1...B4 einen Speicher 21, 22, 23 und 24 enthält, in welchen den Bildwerten an den einzelnen Bildpunkten entsprechende Bildwerte mit nicht näher dargestellten Mitteln geladen werden. Dabei ist angenommen, daß in den Bildspeichern 21 bis 24 die Bildwerte für die Bildpunkte, die innerhalb der Einzelbilder die gleiche Lage haben, unter der gleichen Adresse gespeichert sind. Aus den Speichern 21...24 wird -durch eine Steuereinheit 30 gesteuert - je ein Bildwert aufgerufen. Die dafür erforderlichen Adressen werden von einem Adressengenerator 30 erzeugt, der seinerseits von der Steuereinheit 40 gesteuert wird. Die Adressen hängen außer von der Lage x,y eines Bildpunktes in dem Einzelbild B1 von dem Abstand der Position Ps von der benachbarten Strahlenquellenposition ab, was durch die Zahl m um Ausdruck kommt (für das Beispiel nach Fig. 2 ist m = 3), sowie von der Lage der Schicht, die durch n charakterisiert ist. Für die Schicht L4 ist n = 0, so daß die Adressen A(x,y) für die Speicher 21...24 gleich sind.

Die ausgelesenen vier Bildwerte werden, wie aus der DE-OS 32 37 572 bekannt, einem Extremwert-Decoder 50 zugeführt, an dessen Ausgang derjenige der vier Bildwerte an seinem Eingang erscheint, der der geringsten Absorption entspricht. Dieser Bildwert stellt den Bildwert eines Schichtbildpunktes dar (Verfahrensschritt a)).

Dieser Bildwert wird einem Extremwert-Decoder 60 zugeführt, an dessen Ausgang derjenige seiner beiden Eingangswerte erscheint, der der größten Absorption entspricht. Der Ausgang des Extremwert-Decoders 60 ist mit einem Bildspeicher 70 gekoppelt, der wenigstens ein synthetisches Bild enthält. Die Adresse des Speicherplatzes, aus dem ein Bildwert ausgelesen und in den der Ausgangswert des Extremwert-Decoders 60 eingelesen wird, wird ebenfalls durch den Adressengenerator 40 bestimmt. Der ausgelesene Bildwert (bei Beginn des Verarbeitungprozesses sind die Werte des gesamten Speichers auf Null gesetzt) wird dem zweiten Eingang des Extremwert-Decoders 60 zugeführt, in dem Decoder 60 mit dem Bildwert des jeweiligen Schichtpunktes verglichen, und es wird derjenige Bildwert in dem Speicher 70 gespeichert, der der größeren Absorption entspricht (Verfahrensschritt b)). Die Adresse des Bildpunktes des synthetischen Bildes hat für die durch n = 0 gekennzeichnete Schicht den gleichen Wert wie die den Speichern 21...24 zugeführten Adressen.

Falls mehrere synthetische Bilder berechnet werden sollen, ist für jedes dieser Bilder ein weiterer Speicher vorgesehen und eine entsprechende Anzahl von Extremwert-Decodern 60, deren Eingängen neben dem Ausgangssignal des Extremwert-Decoders 50 das aus dem zugehörigen Speicher ausgelesene Signal zugeführt wird.

Das beschriebene Verfahren wird dann für andere Punkte der Schicht wiederholt, wobei x,y variiert wird, während n konstant bleibt (Schritt c). Anschließend wird das Verfahren für die m-te Schicht (von der ersten Schicht L4 aus gezählt) wiederholt, wobei n den Wert 1 annimmt. Es werden dann jedoch nicht die Bildwerte von Bildpunkten verarbeitet, die unter der gleichen Adresse gespeichert sind, sondern von Bildpunkten, die in x- und/oder in y-Richtung um drei Bildpunkte relativ zueinander versetzt sind. Auch die Adresse des Bildspeichers 70 wird in diesem Fall variiert, jedoch nur so, daß der Bildwert eines Bildpunktes aufgerufen wird, der gegenüber dem aus dem Speicher B1 aufgerufenen Wert um 1 nach links versetzt ist. Nachdem auf diese Weise die durch n = 1 gekennzeichnete Schicht verarbeitet worden ist, wird das Verfahren für weitere Schichten (n = 2, 3), aber auch für Schichten mit negativen Werten von n (diese Schichten liegen unterhalb der Schicht L4) wiederholt. Am Schluß ist in dem Bildspeicher 70 ein synthetisches Bild oder mehrere synthetische Bilder gespeichert.

Die Bildspeicher 20 und 70 sind mit einem Graphikprozessor 80 gekoppelt, der die aus diesen Bildspeichern ausgelesenen Bildwerte so aufbereitet, daß damit Videobilder erzeugt werden können, die auf dem Monitor 10 (vgl. Fig. 1) wiedergegeben werden.

Es gibt verschiedene Möglichkeiten, die Bilder so wiederzugeben, daß ein räumlicher Eindruck entsteht. Wenn nacheinander Einzelbilder und synthetische Bilder so wiedergegeben werden, daß sich fortschreitend andere, der vorhergehenden Perspektive benachbarte Perspektiven des Untersuchungsbereiches ergeben, kann beim Betrachter der Eindruck eines sich drehenden dreidimensionalen Objektes entstehen. Es ist aber auch möglich, die Bilder für eine stereoskopische Betrachtung heranzuziehen, wobei jeweils ein Einzelbild und ein aus einer benachbarten Position aufgenommenen synthetisches Bild ein Stereobildpaar bilden. Solche Bildpaare können beispielsweise dadurch stereoskopisch wiedergegeben werden, daß sie räumlich getrennt auf einer Wiedergabeeinheit angezeigt und durch eine geeignete Brille, z.B. eine Keilbrille oder eine Schwingbrille (vgl. DE-PS 21 57 843), oder bei zwischengeschalteten Polarisationsfiltern durch eine Polarisationsbrille betrachtet werden. Eine andere Möglichkeit besteht darin, ein (oder mehrere) Stereobildpaare auf einem Farbmonitor wiederzugeben, wobei z.B. die Einzelbilder rot, die synthetischen Bilder grün wiedergegeben werden, und das Ganze durch eine Rot/Grün-Brille zu betrachten.

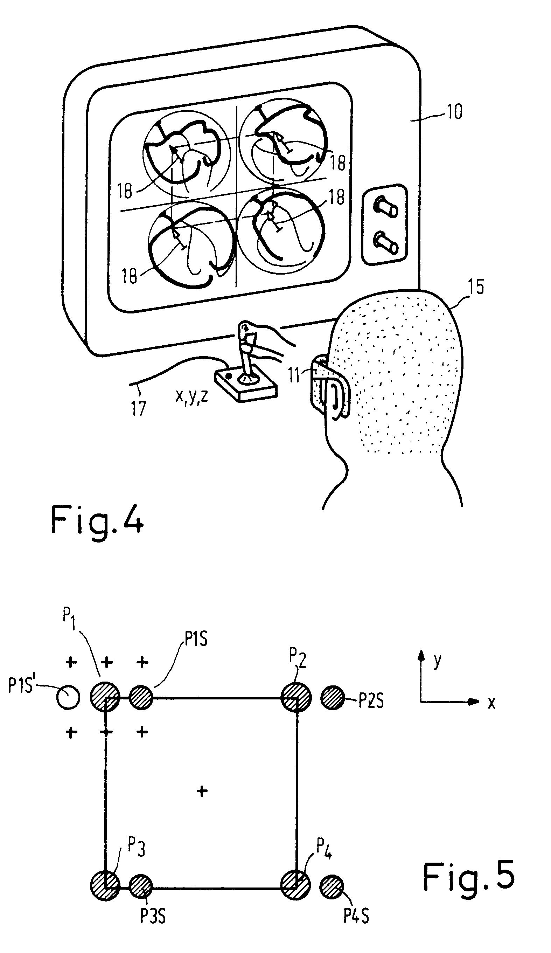

Dieser Fall ist in Fig. 4 dargestellt, wobei auf dem Farbmonitor 10 vier Stereobildpaare wiedergegeben werden, von denen jeweils eins vom Betrachter 15 durch eine Rot/Grün-Brille 16 betrachtt wird. Durch Betätigen eines digitalen Koordinatengebers 17, z.B. in Form eines sogenannten Joysticks, einer "Maus" oder eines sogenannten Track-Balls, kann der Benutzer in jedem Stereobildpaar einen Cursor in Form eines Pfeiles positionieren. Dies wäre an sich auch schon bei Wiedergabe nur eines einzigen Stereobildpaares möglich, doch kann es dabei vorkommen, daß die Perspektive so ungünstig ist, daß eine genaue Positionierung nicht möglich ist. Bei vier Stereobildpaaren gibt es in der Regel jedoch mindestens eins, das eine genauere Positionierung erlaubt. - Der Abstand der Cursorpositionen in den beiden Bildern eines Stereo-Bildpaares ist von der Tiefe abhängig, in der sich innerhalb des Untersuchungsbereiches der durch den Cursor zu markierende Bereich befindet. Es können ggf. auch zwei Positionen pro Bild durch Cursoren markiert und über eine Gerade in jedem Bild miteinander verbunden werden. Gegebenenfalls kann auch eine Maschine (Roboter) oder dergleichen - z.B. für Zwecke der Stereotaxi - entsprechend der vorgegebenen Cursorposition gesteuert werden.

Wie aus Fig 3 ersichtlich ist, der digitale Koordinatengeber 17 mit der Steuereinheit 30 gekoppelt, die daraus die Werte x,y,n ableitet und dem Adressengenerator 40 zuführt, der daraus die Adressen der Bildpunkte in den Einzelbildern und in den synthetischen Bildern erzeugt, an denen der Cursor abzubilden ist. Zu diesem Zweck können die Speicher 20 und 70 zusätzliche Speicher enthalten, die die gleiche Zahl von Speicherplätzen aufweisen wie die Speicher 20 und 70, jedoch eine geringere Speichertiefe, z.B. jeweils nur ein Bit; wenn an dem betreffenden Bildpunkt ein Cursor erscheinen soll, wird der Inhalt des Speicherplatzes auf "1" gesetzt, und anderenfalls ist der Speicherinhalt "0" (oder umgekehrt). Der Graphikkontroller 80 erzeugt dann an der betreffenden Stelle in dem Einzelbild bzw. in den synthetischen Bildern den Cursor in der gewünschten Form.

Die Speicherung der Cursorposition kann aber auch ohne zusätzliche Speicher erfolgen, wenn in dem Bildspeicher nicht die volle Speichertiefe ausgenutzt wird. Z.B. ist es möglich, bei einem Bildspeicher mit acht Bit Wortbreite für einen Bildwert nur sieben Bit für den Bildwert heranzuziehen und ein Bit für die Speicherung der Cursorposition.

Es ist weiterhin möglich, die Position des Cursors und damit die Lage des dadurch markierten Bereiches in einem dreidimensionalen karthesischen Koordinatensystem (vgl. Fig. 2) zu bestimmen, dessen Ursprung z.B. in der Mitte zwischen den Einzelbildern B1, B2 liegt und auf dem Monitor wiederzugeben. Die Steuereinheit 30 ist so ausgelegt, daß sie auch die Koordinaten einer zweiten Cursorposition errechnen kann, so daß die Abstände zweier in den Stereobildpaaren durch Cursoren markierter Bereiche errechnet werden können, so daß eine genaue Ausmessung der Bilder möglich ist.

Fig. 5 zeigt Positionen, für die synthetische Einzelbilder berechnet werden können. Mit P1S ist dabei eine Position bezeichnet, die der in Fig. 2 angedeuteten Position Ps entspricht. Diese Position kann aber auch auf der anderen Seite neben der Strahlenquellenposition P1 liegen oder auch zwischen den Strahlenquellen P1 und P3 oder woanders liegen. Wesentlich ist nur, daß die Positionen auf einer Verbindungsgeraden zwischen zwei Strahlenquellenpositionen liegen und daß ihr Abstand von einer dieser Positionen durch D/m beschreibbar ist, wobei m eine ganze Zahl sein muß. Außerdem sind in Fig. 5 die Positionen angedeutet (schraffiert), aus denen vier Stereobildpaare abgeleitet werden können. Die Positionen P1S...P4S für die synthetischen Bilder sind dabei gegenüber den benachbarten Strahlenquellenpositionen P1...P4 um den gleichen Abstand und in der gleichen Richtung versetzt.

Von den in Fig. 3 dargestellten Blöcken können die Steuereinrichtung 30 und gegebenenfalls der Adressengenerator 40 mittels eines Microprozessors bzw. Microcomputers realisiert werden; gegebenenfalls lassen sich damit auch die Extremwertdecoder 50 und 60 realisieren, doch ist dann lediglich eine sequentielle Bildverarbeitung möglich. Bei 32 Bit-Systemen mit Taktfrequenzen bis zu 25 MHz sind die Rechenzeiten allerdings vergleichsweise klein. Zur Erhöhung der Verarbeitungsgeschwindigkeit kann dabei für jedes synthetische Bild ein Processor vorgesehen sein, der - ggf. über ein Multiplexsystem - auf den Bildspeicher 20 Zugriff hat.

Die Erfindung wurde vorstehend in Verbindung mit Einzelbildern beschrieben, die den Untersuchungsbereich zu einem bestimmten Augenblick abbilden. Bei bewegten Objekten, z.B. bei der Aufnahme von Herzkranzgefäßen mit Kontrastmittelfüllung, kann es aber zweckmäßig sein, eine ganze Sequenz von jeweils zum gleichen Zeitpunkt aufgenommenen Einzelbildern in dieser Weise zu verarbeiten und wiederzugeben.

**Patentansprüche**

1. Verfahren, bei dem ein Untersuchungsbereich aus mehreren Strahlenquellenpositionen zur Erzeugung getrennter Einzelbilder durchstrahlt wird, wobei für jedes Einzelbild von der Absorption in seinen Bildpunkten abhängige digitale Meßwerte gespeichert werden und für einen Schichtbildpunkt einer Schicht im Untersuchungsbereich jeweils ein der Absorption in diesem Punkt entsprechender Bildwert aus den gespeicherten Meßwerten der dem Schichtbildpunkt geometrisch zugeordneten Bildpunkte abgeleitet wird,
dadurch gekennzeichnet, daß für wenigstens eine einer der Strahlenquellenpositionen benachbarte Position (Ps) ein synthetisches Bild (Bs) des Untersuchungsbereichs (5) oder eines Teils davon berechnet wird, indem aus den Bildwerten derjenigen Schichtbildpunkte (z.B. V2), die auf einer Geraden zwischen der Position (Ps) und einem Bildpunkt (bs3) des synthetischen Einzelbildes liegen, jeweils ein Bildwert für den betreffenden Bildpunkt abgeleitet wird, und daß das so erzeugte synthetische Bild (Ps) zur räumlichen Wiedergabe des Untersuchungsbereiches herangezogen wird.

2. Verfahren nach Anspruch 1,
dadurch gekennzeichnet, daß nach jeder Bestimmung des Bildwertes eines Schichtbildpunktes dieser Bildwert zur Berechnung des Bildwertes desjenigen Bildpunktes im synthetischen Bild herangezogen wird, der dem Schichtbildpunkt geometrisch zugeordnet ist, und daß erst danach der Bildwert für einen weiteren Schichtbildpunkt bestimmt wird.

3. Verfahren nach Anspruch 1 oder 2, dadurch gekennzeichnet, daß jede Position für die Berechnung eines synthetischen Bildes auf der Verbindungsgeraden zwischen zwei Strahlenquellenpositionen im Abstand D/m von einer dieser Strahlenquellenpositionen liegt, wobei m eine ganze Zahl größer als 1 ist und D der Abstand zweier Strahlenquellenpositionen, und daß zur Ableitung von Bildwerten für das synthetische Bild Bildwerte von Schichtbildpunkten herangezogen werden, die in Schichtebenen (L1...L7) liegen, in denen sich die Verbindungsgeraden zwischen den Strahlenquellenpositionen (P1, P2) und den Bildpunkten (b11...b14; b21...b24) der zugehörigen Einzelbilder und die Verbindungsgeraden der Bildpunkte (bs1...bs4) des synthetischen Bildes mit der diesem Bild zugeordneten Bestrahlungsposition (Ps) schneiden.

4. Verfahren nach einem der Ansprüche 1 bis 3, dadurch gekennzeichnet, daß das synthetische Bild zusammen mit dem benachbarten Einzelbild einer Stereo-Wiedergabeeinrichtung (10) zugeführt wird.

5. Verfahren nach einem der Ansprüche 1 bis 3, dadurch gekennzeichnet, daß mehrere synthetische Bilder und Einzelbilder im Wechsel so wiedergegeben werden, daß der Untersuchungsbereich nacheinander aus räumlich benachbarten Positionen abgebildet wird.

6. Verfahren nach einem der Ansprüche 1 bis 5, dadurch gekennzeichnet, daß der Bildwert für einen Bildpunkt des synthetischen Bildes durch den Bildwert desjenigen Schichtbildpunktes gebildet wird, der von den auf einer Geraden zwischen dem Bildpunkt im synthetischen Bild und der zugehörigen Position der größten Absorption entspricht.

7. Verfahren nach einem der vorhergehenden Ansprüche, dadurch gekennzeichnet, daß die Lage von durch den Benutzer vorgebbaren Schichtbildpunkten in den Einzelbildern und in dem bzw. den synthetischen Bild(er) berechnet und in diesen Bildern bei der Wiedergabe markiert wird.

8. Verfahren nach Anspruch 7, dadurch gekennzeichnet, daß der Abstand von zwei durch den Benutzer vorgegebenen Schichtbildpunkten berechnet und angezeigt wird.

9. Verfahren nach einem der vorhergehenden Ansprüche, dadurch gekennzeichnet, daß ein dynamischer Vorgang in Form eines Kinofilms aufgenommen, zu einem Stereofilm synthetisiert und wiedergegeben wird.

10. Verfahren nach einem der Ansprüche 7 oder 8, dadurch gekennzeichnet, daß die Meßwerte für die Steuerung einer Maschine (z.B. Roboter) dienen (z.B. Stereotaxi).

11. Anordnung zur Durchführung des Verfahrens nach Anspruch 1, mit mehreren in einer Ebene angeordneten Röntgenstrahlenquellen (1...4) zur Durchstrahlung eines Untersuchungsbereiches, mit einer Bildaufnehmeranordnung (6, 7) zur Aufnahme der von den Strahlquellen erzeugten, räumlich getrennten Einzelbilder des Untersuchungsbereiches, mit Mitteln zum Digitalisieren (8) der der Absorption in den Bildpunkten des Einzelbildes entsprechenden Meßwerte, mit einer ersten Speicheranordnung (20) zum Speichern der Meßwerte, mit Mitteln zum Bestimmen der Bildwerte von Schichtbildpunkten (50), und mit einer Wiedergabeeinheit, die mit der ersten Speicheranordnung (20) koppelbar ist, dadurch gekennzeichnet, daß eine zweite Speicheranordnung (70) zur Aufnahme der Bildwerte wenigstens eines synthetischen Bildes und Mittel (60) zum Ableiten jeweils eines Bildwertes für einen Bildpunkt des synthetischen Bildes aus dem Bildwert eines Schichtbildpunktes vorgesetien sind und daß die Wiedergabeeinheit (10) auch mit der zeueiten Speicheranordnung (70) koppelbar ist.

12. Anordnung nach Anspruch 11, gekennzeichnet durch einen vom Benutzer betätigbaren digitalen Koordinatengeber (17) zur Festlegung der Koordinaten eines Schichtbildpunktes und durch Mittel zum Verändern der Meßwerte und der Bildwerte in denjenigen Bildpunkten der Einzel- bzw. synthetischen Bilder, auf die der Schichtbildpunkt aus der jeweiligen (Strahlenquellen-) Position projiziert wird.

13. Anordnung nach Anspruch 12, gekennzeichnet durch einen Rechner, der den Abstand zwischen zwei durch den Benutzer vorgegebenen Schichtbildpunkten errechnet.

**Claims**

1. A method in which an examination zone is irradiated from a plurality of radiation source positions in order to generate separate single images, for each single image there being stored digital measurement values which are dependent on the absorption in its image points, for a layer image point of a layer in the examination zone there being derived, from the stored measurement values of the image points geometrically associated with the layer image point, an image value which corresponds to the absorption at the relevant point, characterized in that for at least one position (Ps) which neighbours one of the radiation source positions there is calculated a synthetic image (Bs) of the examination zone (5) or a part thereof by deriving, from the image values of those layer image points (for example, V2) which are situated on a straight line between the position (Ps) and an image point (bs3) of the synthetic single image, each time an image value for the relevant image point, the synthetic image (Ps) thus generated being used for the spatial display of the examination zone.

2. A method as claimed in Claim 1, characterized in that after each determination of the image value of a layer image point, this image value is used for calculating the image value of the image point in the synthetic image with which the layer image point is geometrically associated, the image value for a further layer image point being determined only after that.

3. A method as claimed in Claim 1 or 2, characterized in that each position for the calculation of a synthetic image is situated on the connecting line between two radiation source positions at the distance D/m from one of these radiation source positions, where m is an integer larger than 1 and D is the distance between two radiation source positions, and that in order to derive image values for the synthetic image use is made of image values of layer image points which are situated in layer planes (L1 ... L7) in which the connecting lines between the radiation source positions (P1, P2) and the image points (b11 ... b14; b21 ... b24) of the associated single images and the connecting lines between the image points (bs1 ... bs4) of the synthetic image and the radiation source position (Ps) associated with this image intersect.

4. A method as claimed in any one of the Claims 1 to 3, characterized in that the synthetic image is applied to a stereo display device (10) together with the neighbouring single image.

5. A method as claimed in any one of the Claims 1 to 3, characterized in that a plurality of synthetic images and single images are alternately displayed so that the examination zone is successively imaged from spatially neighbouring positions.

6. A method as claimed in any one of the Claims 1 to 5, characterized in that the image value for an image point of the synthetic image is formed by the image value of that layer image point which, on a straight line between the image point in the synthetic image and the associated position, corresponds to the highest absorption.

7. A method as claimed in any one of the preceding Claims, characterized in that the position of layer image points in the single images and in the synthetic image (images) which can be preset by the user is calculated and marked in these images upon display.

8. A method as claimed in Claim 7, characterized in that the distance between two layer image points preset by the user is calculated and indicated.

9. A method as claimed in any one of the preceding Claims, characterized in that a dynamic process is recorded in the form of a cine film, from which a stereo film is synthesized and displayed. 1

10. A method as claimed in any one of the Claims 7 or 8, characterized in that the measurement values are used for the control of a machine (for example, a robot) (for example, stereotaxy).

11. A device for performing the method claimed in Claim 1, it comprising a plurality of X-ray sources (1 ... 4) which are arranged in one plane in order to irradiate an examination zone, an image pick-up device (6,7) for picking up the spatially separate single images of the examination zone which are generated by the radiation sources, means (8) for digitizing the measurement values corresponding to the absorption in the image points of the single image, a first storage device (20) for storing the measurement values, means (50) for determining the image values of layer image points, and a display unit which can be coupled to the first memory device (20), characterized in that there are provided a second storage device (70) for storing the image values of at least one synthetic image and means (60) for deriving each time one image value for an image point of the synthetic image from the image value of a layer image point, it also being possible to couple the display unit (10) to the second storage device (70).

**12.** A device as claimed in Claim 11, characterized in that it comprises a digital coordinate generator (17) which can be activated by the user in order to determine the coordinates of a layer image point and means for changing the measurement values and the image values in those image points of the single images or synthetic images onto which the layer image point is projected from the relevant (radiation source) position.

**13.** A device as claimed in Claim 12, characterized in that it comprises an arithmetic device which calculates the distance between two layer image points preset by the user.

**Revendications**

**1.** Procédé consistant à irradier une zone d'examen à partir de plusieurs positions de source de rayonnement pour engendrer des images individuelles séparées, procédé dans lequel, pour chaque image individuelle, sont stockées des valeurs numériques de mesure dépendantes de l'absorption dans les points d'image de celle-ci et dans lequel, pour un point d'image tomographique d'une tranche située dans la zone d'examen, est déduite une valeur d'image correspondant à l'absorption dans ce point à partir des valeurs de mesure stockées des points d'image associés géométriquement au point d'image tomographique, caractérisé en ce que, pour au moins une position (Ps) voisine de l'une des positions de source de rayonnement, est calculée une image synthétique (Bs) de la zone d'examen (5) ou d'une partie de celle-ci en déduisant chaque fois à partir des valeurs d'image des points d'image tomographique (par exemple V2) situés sur une ligne droite reliant la position (Ps) et un point d'image (bs3) de l'image individuelle synthétique, une valeur d'image pour le point d'image concerné, et en ce que l'image synthétique ainsi engendrée (Ps) est utilisée pour l'affichage stéréoscopique de la zone d'examen.

**2.** Procédé selon la revendication 1, caractérisé en ce que, après chaque détermination de la valeur d'image d'un point d'image tomographique, cette valeur d'image est utilisée pour le calcul de la valeur d'image du point d'image dans l'image synthétique associé géométriquement au point d'image tomographique et que, seulement après cette opération, est déterminée la valeur d'image pour un autre point d'image tomographique.

**3.** Procédé selon la revendication 1 ou 2, caractérisé en ce que chaque position pour le calcul d'une image synthétique est située sur la ligne de jonction entre deux positions de source de rayonnement, à une distance D/m de l'une de ces positions de source de rayonnement, m étant un nombre entier supérieur à 1 et D étant la distance entre deux positions de la source de rayonnement et en ce que, pour la déduction de valeurs d'image pour l'image synthétique, on fait intervenir des valeurs d'image de points d'image tomographique situés dans des plans de tranche (L1...L7) dans lesquels s'entrecoupent les droites de jonction entre les positions de source de rayonnement (P1,P2) et les points d'image (b11...b14; b21...b24) des images individuelles associées et les droites de jonction des points d'image (bs1...bs4) de l'image synthétique à la position d'irradiation (Ps) associée à cette image.

**4.** Procédé selon l'une des revendications 1 à 3, caractérisé en ce que l'image synthétique est appliquée à un dispositif d'affichage stéréoscopique (10) conjointement avec l'image individuelle voisine.

**5.** Procédé selon l'une des revendications 1 à 3, caractérisé en ce que plusieurs images synthétiques et plusieurs images individuelles sont affichées alternativement de façon que la zone d'examen est reproduite successivement à partir de positions voisines dans l'espace.

**6.** Procédé selon l'une des revendications 1 à 5, caractérisé en ce que la valeur d'image pour un point d'image de l'image synthétique est formée par la valeur d'image du point d'image tomographique qui, sur une droite de jonction entre le point d'image de l'image synthétique et la position associée, correspond à l'absorption la plus grande.

**7.** Procédé selon l'une des revendications précédentes, caractérisé en ce que les positions de points d'image tomographique prédéterminés par l'utilisateur dans les images individuelles et l'image synthétique ou les images synthétiques sont calculées et sont marquées dans ces images lors de l'affichage.

**8.** Procédé selon la revendication 7, caractérisé en ce que la distance entre deux points d'image tomographique prédéterminés par l'utilisateur est calculée et indiquée.

9.  Procédé selon l'une des revendications précédentes, caractérisé en ce qu'une opération dynamique enregistrée sous la forme d'un film cinématographique est synthétisée en film stéréoscopique et affichée de la sorte.

10. Procédé selon l'une des revendications 7 et 8, caractérisé en ce que les valeurs de mesure servent à la commande d'une machine (par exemple un robot) (par exemple la stéréotaxie).

11. Dispositif pour la mise en oeuvre du procédé selon la revendication 1, comportant une pluralité de n sources de rayonnement X (1...4) disposées dans un même plan, pour irradier une zone d'examen, un dispositif de prise d'images (6, 7) pour capter les images individuelles, séparées dans l'espace, de la zone d'examen, engendrées par les sources de rayonnement, des moyens (8) pour numériser les valeurs de mesure correspondant à l'absorption dans les points d'image de l'image individuelle, un premier dispositif de mémorisation (20) pour stocker les valeurs de mesure, des moyens pour déterminer les valeurs d'image de points d'image tomographique (50), et une unité d'affichage pouvant être couplée au premier dispositif de mémorisation (20), caractérisé en ce qu'il est prévu un deuxième dispositif de mémorisation (70) pour stocker les valeurs d'image d'au moins une image synthétique, et des moyens (60) pour déduire de la valeur d'image de chaque point d'image tomographique une valeur d'image pour un point d'image de l'image synthétique, et en ce que l'unité d'affichage (10) peut également être couplée au deuxième dispositif de mémorisation (70).

12. Dispositif selon la revendication 11, caractérisé par un générateur numérique de coordonnées (17) pouvant être manoeuvré par l'utilisateur et servant à fixer les coordonnées d'un point d'image tomographique et par des moyens pour faire varier les valeurs de mesure et les valeurs d'image dans les points d'image des images individuelles et synthétiques sur lesquels est projeté le point d'image tomographique à partir de la position concernée (de source de rayonnement).

13. Dispositif selon la revendication 12, caractérisé par un calculateur calculant la distance séparant deux points d'image tomographique prédéterminés par l'utilisateur.

Fig.1

Fig.2

Fig.3

Fig.4

Fig.5